Europäisches Patentamt

European Patent Office

Office européen des brevets

(19)

(11) Numéro de publication : **0 163 576**
**B1**

(12)

# FASCICULE DE BREVET EUROPÉEN

(45) Date de publication du fascicule du brevet :
**15.03.89**

(21) Numéro de dépôt : **85401026.1**

(22) Date de dépôt : **24.05.85**

(51) Int. Cl.⁴ : **H 01 M  6/18,** H 01 B  1/12,
C 08 L  71/02, C 08 L  85/00,
C 08 G  65/32

(54) Matériau macromoléculaire à conduction ionique pour la réalisation d'électrolytes ou d'électrodes.

(30) Priorité : **29.05.84 FR 8408417**

(43) Date de publication de la demande :
**04.12.85 Bulletin 85/49**

(45) Mention de la délivrance du brevet :
**15.03.89 Bulletin 89/11**

(84) Etats contractants désignés :
**AT BE CH DE GB IT LI LU NL SE**

(56) Documents cités :
**EP--A-- 0 037 776**
**EP--A-- 0 149 393**
**FR--A-- 2 430 439**

(73) Titulaire : **SOCIETE NATIONALE ELF AQUITAINE**
**Tour Aquitaine**
**F-92400 Courbevoie (FR)**

(72) Inventeur : **Armand, Michel**
**Domaine Jean Jaurès Allée Maurice Ravel**
**F-38130 Echirolles (FR)**
Inventeur : **Muller, Daniel**
**12 rue Frédéric Mistral**
**F-64000 Pau (FR)**
Inventeur : **Chabagno, Jean-Michel**
**2 rue Alphonse Cadier**
**F-64000 Pau (FR)**

(74) Mandataire : **Boillot, Marc**
**SOCIETE NATIONALE ELF AQUITAINE Division Pro-**
**priété Industrielle Tour Elf**
**F-92078 Paris la Défense Cédex 45 (FR)**

**Description**

La présente invention concerne un nouveau matériau macromoléculaire à condition ionique pour la réalisation d'électrolyte ou d'électrode. Elle concerne en particulier des matériaux se présentant sous la forme d'un réseau et/ou d'un polycondensat polyether-sel.

De tels matériaux macromoléculaires à conduction ionique ne sont pas cristallins, ou le sont suffisamment peu, à température ambiante pour que l'on puisse les utiliser pour réaliser des générateurs électrochimiques de courant, qu'ils soient primaires ou secondaires.

Selon l'art antérieur, on connaît des électrolytes solides constitués par des solutions solides de composés ioniques dans des polymères. On peut par exemple se reporter au brevet européen 0 013 199, intitulé « générateurs électrochimiques de production de courant et nouveaux matériaux pour leur fabrication » qui décrit des solutions solides de sels de lithium dans des polymères aprotiques polaires susceptibles de solvater le cation. Ces solutions constituent des électrolytes solides utilisables dans des générateurs solides en couches minces. Parmi les polymères cités dans ce brevet Européen, figurent notamment les polyoxydes d'éthylène, les polyoxydes de propylène et leurs copolymères.

De façon à améliorer les propriétés mécaniques des électrolytes ainsi constitués et leur comportement vis-à-vis de la cristallisation, on a proposé dans la demande de brevet français n° 2 485 274 « Electrolyte solide à base de matériau macromoléculaire à conduction ionique » d'utiliser comme électrolyte un matériau complexe élastomère réticulé. La réticulation se fait à partir de polymères contenant des fonctions hydroxyles réticulables par des isocyanates, ce qui conduit à des réseaux uréthannes dans lesquelles lesdites fonctions sont susceptibles de réagir avec des éléments de l'anode et/ou de la cathode et donc de générer une dégradation du polymère qui ne pourra plus alors jouer son rôle de liant élastomère, concomitante à une consommation d'une partie des matériaux de cathode ou d'anode par oxydation irréversible.

Les produits obtenus selon cette technique de réticulation présentent, du fait de la taille importante des nœuds du réseau initié par des isocyanates, un pourcentage volumique (ou massique) important de partie non solvatante du cation ce qui peut pénaliser les dissolutions et/ou la dissociation du sel entraînant par là une baisse de conductivité. Si on veut remédier à la mauvaise solvatation, on peut prévoir d'augmenter le poids moléculaire du polymère fonctionnel de départ mais cela conduit en général à une diminution de la conductivité ionique du complexe polyéther-sel par apparition de phénomènes de cristallisation à basse température.

L'invention prévoit au contraire un matériau macromoléculaire constitué par un réseau polyéther sel dans lequel les nœuds du réseau ont une faible taille et correspondant à des agents de réticulation favorables à l'obtention d'une température de transition vitreuse la plus basse possible, ledit matériau présentant un large domaine de stabilité rédox. De plus, ce matériau présente l'avantage d'être quasiment exempt de protons après réticulation.

Pour cela, l'invention fait appel à des dérivés métalliques ou métalloïdiques permettant d'obtenir des réseaux contenant des liaisons du type.

R—O—M-, formule dans lequel R représente un polyéther et M un métal ou un métalloïde au moins divalent.

Ainsi l'invention concerne un matériau macromoléculaire à conduction ionique constitué par un sel en solution dans un matériau macromoléculaire qui est constitué par au moins deux chaînes polyéther reliées entre elles par un pont, ledit pont comportant au moins un atome choisi parmi le silicium, le cadmium, le bore et le titane, ledit atome étant relié à au moins une des chaînes par un atome d'oxygène.

Des matériaux similaires dans lesquels l'atome est un atome de n'importe quel métal sont revendiqués, dans la demande de brevet européen n° 0 149 393 mais seulement les matériaux pour lesquels l'atome est choisi parmi l'aluminium, le zinc ou le magnésium sont décrits dans cette demande antérieure.

De préférence, ledit atome est un atome de silicium et il est relié à chacune desdites chaînes polyéther par l'intermédiaire d'un atome d'oxygène pour chacune des chaînes.

De préférence encore, ledit matériau macromoléculaire est constitué par au moins trois chaînes polyether reliées entre elles par un pont et ledit pont comporte au moins un atome de silicium relié à chacune desdites trois chaînes par un atome d'oxygène.

Selon des modes de réalisation préférés, lesdites chaînes polyéther peuvent être identiques ou différentes et constituée chacune par un homopolymère ou un copolymère, de préférence un homopolymère ou copolymère de l'oxyde d'éthylène.

Selon une autre caractéristique, chacune desdites chaînes a un poids moléculaire compris entre 250 et 30 000.

Pour obtenir les matériaux macromoléculaires selon l'invention, on peut utiliser le procédé qui consiste à faire réagir au moins un polyétherglycol, et/ou un de ses sels métalliques, mono ou polydispersé, pour ou en mélange dans au moins un autre polyétherglycol, ledit polyétherglycol que l'on fait réagir correspondant aux chaînes polyéther ci-dessus, et au moins un agent de réticulation et/ou de condensation, ledit agent comportant au moins un atome choisi parmi le silicium, le cadmium, le bore et le titane, ladite réaction ayant lieu en présence d'un sel destiné à être mis en solution dans ledit matériau macromoléculaire.

Par l'expression « mono ou polydispersé », on veut dire que l'on peut avoir des polyetherglycols de même poids moléculaire ou de poids moléculaires différents.

De préférence, le procédé consiste en outre à étaler le mélange au cours de la réaction et avant qu'elle ne soit terminée de façon à obtenir une couche mince.

Selon un premier mode de réalisation de ce procédé, ladite réaction se fait avec une quantité au plus stoéchiométrique d'un dérivé halogène ou pseudo-halogène représenté par la formule :

$$R'_x MX_{(n-x)}$$

dans laquelle

R' représente un radical alkyl, de préférence le méthyl.

x représente le nombre de radicaux R'.

X est un halogène ou un pseudo-halogène tq SGN⁻.

M est un métal ou un métalloïde au moins divalent choisi parmi le silicium, le cadmium, le bore et le titane.

n est la valence de M avec $n-x \geqslant 2$.

Selon un second mode de réalisation, le procédé consiste à effectuer une transéthérification par réaction de polyetherglycols sur des alcoxydes légers dudit métal ou métalloïde, représenté par la formule R''—O—M dans laquelle R'' est un radical alkyl comportant de 1 à 8 atomes de carbone, M a la même signification que ci-dessus.

Selon un troisième mode de réalisation, le procédé consiste à effectuer une polycondensation sur des polyétherglycols en présence d'acide borique $B(OH)_3$.

Mais l'invention concerne aussi des électrodes composites réalisées à partir du matériau macromoléculaire décrit ci-dessus. Ces électrodes peuvent être obtenues selon les modes de réalisation décrits, il suffit que le mélange initial comporte, sous forme de poudre, le composé actif de ladite électrode.

L'intérêt du procédé de fabrication des matériaux macromoléculaires selon l'invention pour la fabrication d'électrolytes ou d'électrodes réside essentiellement dans le fait que la réaction peut avoir lieu à température ambiante et donc peut présenter une cinétique suffisamment lente pour que l'on puisse facilement étaler le produit en couche mince.

Dans le cas où la réaction est faite à partir de poly-ols, la cinétique est parfaitement controlable par élimination de l'hydracide formé. Cette élimination peut être favorisée par un accroissement de la température et/ou avoir lieu sous vide, en présence d'un composé susceptible de capter l'hydracide et neutre vis-à-vis de la chaîne électrochimique du générateur.

Dans le cas où le mélange de départ contient des sels métalliques de polyglycol, il se forme des halogénures de métal alcalin qui précipitent dans le milieu réactionnel ou qui peuvent, selon leur nature, se mettre en solution dans le polyether formé et contribuer ainsi à l'accroissement de la conductivité ionique.

De façon à mieux comprendre les caractéristiques et avantages de l'invention, les exemples suivant sont donnés, à titre illustratif, mais nullement limitatif.

Dans ces exemples on compare les conductivités de matériaux obtenus selon l'art antérieur — réticulation aux tri-isocyanates — et de matériaux obtenus selon l'invention.

1) Etude d'un matériau obtenu à partir d'un polyoxyde d'éthylèneglycol, de PM 3 000, dans lequel est mis en solution du perchlorate de lithium $LiClO_4$ avec un rapport O/Li = 12. Art antérieur. Le polyoxyéthylèneglycol est réticulé en présence d'une quantité stoéchiométrique de tri-isocyanate aliphatique, en présence d'amine comme catalyseur et en solution dans l'acétonitrile en présentant un extrait sec de 70 %. — invention — La réaction a lieu dans l'acétonitrile et en présence de $CH_3SiCl_3$. Le produit réticule en 10 mn à température ambiante (25 °C), sans catalyseur.

La fin de la réaction, le produit est étalé sur un support, la réaction est alors terminée par élévation de la température. On étire de façon à obtenir un film mince. Le $CH_3SiCl_3$ était présent en quantité stoéchiométrique par rapport au polyetherglycol de départ. On a mesuré les températures pour lesquelles on obtient les valeurs, en $\Omega^{-1}\,cm^{-1}$ de $10^{-6}$, $10^{-5}$ et $10^{-4}$ pour la conductivité. Les résultats obtenus sont notés dans le tableau (I) suivant.

(I) : POEG 3 000 Stoechiométrique.

| $\overset{\sigma}{\Omega^{-1}}\,cm^{-1}$ | Tri-isocyanates | | | $CH_3\,Si\,Cl_3$ | | |
|---|---|---|---|---|---|---|
| | $10^{-6}$ | $10^{-5}$ | $10^{-4}$ | $10^{-6}$ | $10^{-5}$ | $10^{-4}$ |
| $\theta$ (°C) | 38 | 48 | 90 | 24 | 40 | 80 |

On remarque sur ce tableau que l'on a abaissé les températures de l'ordre de 24 à 10 °C ce qui revient à dire que l'on a augmenté la conductivité.

3

2) Etude des mêmes matériaux mais obtenus avec une quantité inférieure à la stoechiométrie (10 %) d'isocyanate et de méthyltrichlorosilane ($CH_3SiCl_3$). Les résultats obtenus sont notés dans le tableau II.

II : POEG 3 000 Stoechiométrie moins 10 %

| $\Omega^{\sigma}_1$ cm$^{-1}$ | Tri-isocyanate | | | $CH_3$ Si $Cl_3$ | | |
|---|---|---|---|---|---|---|
| | $10^{-6}$ | $10^{-5}$ | $10^{-4}$ | $10^{-6}$ | $10^{-5}$ | $10^{-4}$ |
| θ (°C) | 36 | 55 | 85 | 20 | 35 | 65 |

On remarque dans ce tableau que l'on a fortement augmenté la conductivité bien que l'on soit parti d'une stoechiométrie inférieure.

3) On a réalisé la même étude comparative mais en partant d'un mélange de polyetherglycol constitué par
80 % (en poids) de polyoxyde d'éthylèneglycol
20 % (en poids) de polypropylèneglycol
comprenant en solution $LiClO_4$ avec le rapport O/Li = 12.
La réticulation au méthyltrichlorosilane s'est effectuée après mise en solution dans l'acétonitrile avec un extrait sec de 50 %. Les résultats obtenus sont notés dans le tableau III où l'on a aussi indiqué les poids moléculaires

III     POEG     PM = 6 000     80 % poids
         PPG     PM = 3 000     20 % poids

| $\Omega^{\sigma}_1$ cm$^{-1}$ | Tri-isocyanate | | | $CH_3$ Si $Cl_3$ | | |
|---|---|---|---|---|---|---|
| | $10^{-6}$ | $10^{-5}$ | $10^{-4}$ | $10^{-6}$ | $10^{-5}$ | $10^{-4}$ |
| θ (°C) | 30 | 50 | 95 | 21 | 40 | 70 |

## Revendications

1. Matériau à conduction ionique constitué par un matériau macromoléculaire dans lequel un sel est dissous, ledit matériau macromoléculaire étant constitué par au moins deux chaînes polyéther reliées entre elles par un pont, ledit pont comportant au moins un atome choisi parmi le silicium, le cadmium, le bore et le titane.

2. Matériau macromoléculaire selon la revendication 1, caractérisé en ce que ledit atome est relié à au moins une des chaînes par l'intermédiaire d'un atome d'oxygène pour chacune desdites chaînes.

3. Matériau selon la revendication 2, caractérisé en ce que ledit atome est un atome de silicium.

4. Matériau selon la revendication 1, caractérisé en ce qu'il est constitué par au moins trois chaînes polyéther reliées entre elles par un pont, ledit pont comportant au moins un atome de silicium relié à chacune des trois chaînes par un atome d'oxygène pour chacune desdites chaînes.

5. Matériau à conduction ionique selon la revendication 1 caractérisé en ce que lesdites chaînes sont constituées chacune par un homopolymère ou un copolymère.

6. Matériau selon la revendication 5, caractérisé en ce que lesdites chaînes sont constituées par un homopolymère ou un copolymère de l'oxyde d'éthylène.

7. Matériau selon l'une des revendications 5 ou 6, caractérisé en ce que les chaînes présentent des motifs identiques.

8. Matériau selon la revendication 5, caractérisé en ce que les chaînes présentent des poids moléculaires différents compris entre 250 et 30 000.

9. Procédé de fabrication d'un matériau à conduction ionique constitué par un matériau macromoléculaire dans lequel un sel est dissous, caractérisé en ce qu'il consiste à faire réagir un polyétherglycol, et/ou son sel métallique, mono ou polydispersé, pur ou en mélange dans au moins un autre polyétherglycol, avec au moins un agent de réticulation ou de condensation, ledit agent comportant au moins un atome choisi parmi le silicium, le cadmium, le bore et le titane, et à porter ledit sel en solution dans le produit de la réaction.

10. Procédé selon la revendication 9, caractérisé en ce que la réaction a lieu en présence du sel.

11. Procédé selon la revendication 9, caractérisé en ce que ledit agent est présent en quantité au plus

4

stoechiométrique et en ce qu'il est constitué par un dérivé halogéné ou pseudohalogéné représenté par la formule

$$R'_x MX_{(n-x)}$$

dans laquelle :
R' représente un radical alkyle, de préférence méthyle,
x représente le nombre de radicaux R'
X est un halogène ou un pseudohalogène,
M est un élément choisi parmi le silicium, le cadmium, le bore et le titane,
n est la valence de M avec la condition n—x ≥ 2.

12. Procédé selon la revendication 9, caractérisé en ce que ladite réaction est une réaction de transéthérification en présence d'un agent constitué par un alkoxyde léger dudit métal représenté par la formule R"—O—M dans laquelle R" est un radical alkyle comportant de 1 à 8 atomes de carbone, M est un élément choisi parmi le silicium, le cadmium, le bore et le titane.

13. Procédé selon la revendication 9, caractérisé en ce que la réaction est une réaction de transéthérification et que l'agent de pontage est un acide borique.

## Claims

1. Ion-conducting material comprising a macromolecular material having a salt in solution therein, the said macromolecular material comprising at least two polyether chains connected to each other by a bridge, the said bridge containing at least one atom selected from silicon, cadmium, boron and titanium.

2. Material according to claim 1, characterised in that said atom is connected by an oxygen atom to at least one of said chains.

3. Material according to claim 2, characterised in that said atom is a silicon atom.

4. Material according to claim 1, characterised in that it comprises at least three polyether chains connected to each other by a bridge, the said bridge containing at least one silicon atom connected to each of the said chains by an oxygen atom.

5. Material according to claim 1, characterised in that said chains each consist of a homopolymer or a copolymer.

6. Material according to claim 5, characterised in that said chains consist of a homopolymer or a copolymer containing units from ethylene oxide.

7. Material according to claim 5 or 6, characterised in that the chains contain identical units.

8. Material according to claim 5, characterised in that the molecular weights of the chains are different and comprised between 250 and 30 000.

9. Process for the manufacture of an ion-conducting material comprising a macromolecular material having a salt in solution therein, said process being characterised in that it comprises reacting a polyetherglycol with at least one cross-linking or condensing agent, said agent containing at least one atom selected from silicon, cadmium, boron and titanium, and bringing the said salt in solution in the product of the reaction.

10. Process according to claim 9, characterised in that the reaction is carried out in the presence of the salt.

11. Process according to claim 9, characterised in that the said agent is present in at most a stoichiometric quantity and comprises a halogen or pseudohalogen derivative of the formula

$$R'_x MX_{(n-x)}$$

wherein :
R' représents an alkyl radical, preferably a methyl radical,
x represents the number of radicals R',
X is a halogen or pseudohalogen,
M is an element selected from silicon, cadmium, boron and titanium,
n is the valency of M with the proviso that n—x ≥ 2.

12. Process according to claim 9, characterised in that the said reaction is a transetherification reaction performed in the presence of an agent consisting of a light alkoxyde of the said metal represented by the formula R"—O—M in which R" is an alkyl radical having from 1 to 8 carbon atoms, and M is an element selected from silicon, cadmium, boron and titanium.

13. Process according to claim 9, characterised in that the reaction is a transetherification reaction and the bridging agent consists of a boric acid.

## Patentansprüche

1. Ionenleitendes Material, bestehend aus einem makromolekularen Material, in dem ein Salz gelöst ist, wobei das makromolekulare Material aus wenigstens zwei über eine Brücke miteinander verknüpften Polyetherketten besteht, wobei die Brücke wenigstens ein Atom umfaßt, ausgewählt aus der Gruppe Silizium, Cadmium, Bor und Titan.

2. Makromolekulares Material nach Anspruch 1, dadurch gekennzeichnet, daß das besagte Atom mit wenigstens einer der Ketten über ein Sauerstoffatom für jede der Ketten verknüpft ist.

3. Material nach Anspruch 2, dadurch gekennzeichnet, daß das besagte Atom ein Siliziumatom ist.

4. Material nach Anspruch 1, dadurch gekennzeichnet, daß es aus wenigstens drei miteinander über eine Brücke verknüpften Ketten besteht, wobei die Brücke wenigstens ein Siliziumatom umfaßt, das mit jeder der drei Ketten durch ein Sauerstoffatom für jede der Ketten verknüpft ist.

5. Ionenleitendes Material nach Anspruch 1, dadurch gekennzeichnet, daß die genannten Ketten jeweils aus einem Homopolymer oder einem Copolymer gebildet sind.

6. Material nach Anspruch 5, dadurch gekennzeichnet, daß die genannten Ketten aus einem Homopolymer oder einem Copolymer von Ethylenoxid gebildet sind.

7. Material nach Anspruch 5 oder 6, dadurch gekennzeichnet, daß die genannten Ketten identische Struktureinheiten darstellen.

8. Material nach Anspruch 5, dadurch gekennzeichnet, daß die Ketten ein Molekulargewicht zwischen 250 und 30.000 aufweisen.

9. Verfahren zur Herstellung eines ionenleitenden Materials, bestehend aus einem makromolekularen Material, in dem ein Salz gelöst ist, dadurch gekennzeichnet, daß man ein Polyetherglycol und/oder sein mono- oder polydisperses Metallsalz in reiner Form oder im Gemisch mit wenigstens einem anderen Polyetherglycol mit wenigstens einem Vernetzungs- oder Kondensationsmittel reagieren läßt, wobei dieses Mittel wenigstens ein Atom umfaßt, ausgewählt aus der Gruppe Silizium, Cadmium, Bor und Titan, und das genannte Salz im Reaktionsprodukt in Lösung bringt.

10. Verfahren nach Anspruch 9, dadurch gekennzeichnet, daß die Reaktion in Anwesenheit eines Salzes stattfindet.

11. Verfahren nach Anspruch 9, dadurch gekennzeichnet, daß das besagte Mittel in einer höchstens stöchiometrischen Menge vorliegt und daß es durch ein Halogen- oder Pseudohalogenderivat der Formel

$$R'_x MX_{(n-x)}$$

gebildet ist, worin

R' einen Alkylrest, vorzugsweise Methyl,

x die Zahl der R'-Reste,

X ein Halogen oder ein Pseudohalogen darstellen,

M ein Element ist, ausgewählt aus der Gruppe Silizium, Cadmium, Bor und Titan, und

n die Wertigkeit von M ist, mit der Maßgabe, daß $n-x \geq 2$.

12. Verfahren nach Anspruch 9, dadurch gekennzeichnet, daß die besagte Reaktion eine Umetherungsreaktion ist in Anwesenheit eines Mittels, gebildet durch ein leichtes Alkanolat des Metalls der Formel R''—O—M, worin R'' Alkylrest mit 1 bis 8 Kohlenstoffatomen ist und M ein Element, ausgewählt aus der Gruppe Silizium, Cadmium, Bor und Titan.

13. Verfahren nach Anspruch 9, dadurch gekennzeichnet, daß die Reaktion eine Umetherungsreaktion ist und das Brückenbildungsmittel eine Borsäure.